(19) Europäisches Patentamt
European Patent Office
Office européen des brevets

(11) **EP 1 540 151 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **03747966.4**

(22) Anmeldetag: **05.09.2003**

(51) Int Cl.:
*F01N 3/08* (2006.01)    *F01N 11/00* (2006.01)

(86) Internationale Anmeldenummer:
**PCT/EP2003/009846**

(87) Internationale Veröffentlichungsnummer:
**WO 2004/022934 (18.03.2004 Gazette 2004/12)**

(54) **VERFAHREN ZUR ERMITTLUNG DES ALTERUNGSGRADES EINES STICKOXID-SPEICHERKATALYSATORS EINER BRENNKRAFTMASCHINE INSBESONDERE EINES KRAFTFAHRZEUGES**

METHOD FOR DETERMINING THE DEGREE OF AGEING OF AN $NO_x$-STORAGE CATALYST OF AN INTERNAL COMBUSTION ENGINE, ESPECIALLY IN A MOTOR VEHICLE

PROCEDE POUR DETERMINER LE DEGRE DE VIEILLISSEMENT D'UN CATALYSEUR ACCUMULATEUR D'OXYDE D'AZOTE D'UN MOTEUR A COMBUSTION INTERNE, NOTAMMENT D'UNE AUTOMOBILE

(84) Benannte Vertragsstaaten:
**DE FR GB IT**

(30) Priorität: **07.09.2002 DE 10241499**

(43) Veröffentlichungstag der Anmeldung:
**15.06.2005 Patentblatt 2005/24**

(73) Patentinhaber: **AUDI AG**
**85045 Ingolstadt (DE)**

(72) Erfinder: **ODENDALL, Bodo**
**86633 Neuburg (DE)**

(74) Vertreter: **Krah, Annette**
**Audi AG,**
**Patentabteilung I/EX**
**85045 Ingolstadt (DE)**

(56) Entgegenhaltungen:
**WO-A-00/29729**    **WO-A-02/14658**

**Beschreibung**

Die Erfindung betrifft ein Verfahren zur Ermittlung des Alterungsgrades eines Stickoxid-Speicherkatalysators einer Brennkraftmaschine insbesondere eines Kraftfahrzeugs nach dem Oberbegriff des Anspruchs 1.

In der heutigen Fahrzeugtechnik werden Ottomotoren als Brennkraftmaschinen mit einer Benzin-Direkteinspritzung anstatt einer konventionellen Saugrohreinspritzung bevorzugt, da derartige Brennkraftmaschinen gegenüber den herkömmlichen Ottomotoren deutlich mehr Dynamik aufweisen, bezüglich Drehmoment und Leistung besser sind und gleichzeitig eine Verbrauchssenkung um bis zu 15 % ermöglichen. Möglich macht dies vor allem eine sogenannte Schichtladung im Teillastbereich, bei der nur im Bereich der Zündkerze ein zündfähiges Gemisch benötigt wird, während der übrige Brennraum Luft befüllt wird. Dadurch kann der Motor entdrosselt gefahren werden, was zu reduzierten Ladungswechseln führt. Zusätzlich profitiert der Benzin-Direkteinspritzer von den reduzierten Wärmeverlusten, da die Luftschichten um die Gemischwolke herum zum Zylinder und zum Zylinderkopf hin isolieren. Da herkömmliche Brennkraftmaschinen, die nach dem Saugrohrprinzip arbeiten, bei einem derartigen hohen Luftüberschuss, wie er bei der Benzin-Direkteinspritzung vorliegt, nicht mehr zündfähig sind, wird bei diesem Schichtlademodus das Kraftstoff-Gemisch um die zentral im Brennraum positionierte Zündkerze konzentriert, während sich in den Randbereichen des Brennraums reine Luft befindet. Um das Kraftstoff-Gemisch um die zentral im Brennraum positionierte Zündkerze herum zentrieren zu können, ist eine gezielte Luftströmung im Brennraum erforderlich, eine sogenannte Tumbleströmung. Dazu wird im Brennraum eine intensive, walzenförmige Strömung ausgebildet und der Kraftstoff erst im letzten Drittel der Kolbenaufwärtsbewegung eingespritzt. Durch die Kombination von gezielter Luftströmung und spezieller Geometrie des Kolbens, der z. B. über eine ausgeprägte Kraftstoff- und Strömungsmulde verfügt, wird der besonders fein zerstäubte Kraftstoff in einem sogenannten "Gemischballen" optimal um die Zündkerze konzentriert und sicher entflammt. Für die jeweils optimale Anpassung der Einspritzparameter (Einspritzzeitpunkt, Kraftstoffdruck) sorgt die Motorsteuerung.

Derartige Brennkraftmaschinen können daher entsprechend lange im Magerbetrieb betrieben werden, was sich, wie dies oben bereits dargelegt worden ist, positiv auf den Kraftstoffverbrauch insgesamt auswirkt. Dieser Magerbetrieb bringt jedoch den Nachteil mit sich, dass die Stickoxide (NOx) im mageren Abgas vom 3-Wege-Katalysator nicht reduziert werden können. Um die Stickoxid-Emissionen im Rahmen vorgeschriebener Grenzen, z. B. des Euro-IV-Grenzwertes zu halten, werden in Verbindung mit derartigen Brennkraftmaschinen regelmäßig Stickoxid-Speicherkatalysatoren eingesetzt. Diese Stickoxid-Speicherkatalysatoren werden so betrieben, dass die von der Brennkraftmaschine erzeugten Stickoxide in einer ersten Betriebsphase als Magerbetriebsphase in den Stickoxid-Speicherkatalysator eingespeichert werden. Diese erste Betriebsphase oder Magerbetriebsphase des Stickoxid-Speicherkatalysators wird auch als Einspeicherphase bezeichnet. Mit zunehmender Dauer der Einspeicherphase nimmt der Wirkungsgrad des Stickoxid-Speicherkatalysators ab, was zu einem Anstieg der Stickoxid-Emissionen hinter dem Stickoxid-Speicherkatalysator führt. Die Ursache für die Abnahme des Wirkungsgrades liegt in der Zunahme des Stickoxid-Füllstandes des Stickoxid-Speicherkatalysators. Der Anstieg der Stickoxid-Emissionen hinter dem Stickoxid-Speicherkatalysator kann überwacht und nach Überschreiten eines vorgebbaren Schwellenwertes eine zweite Betriebsphase des Stickoxid-Speicherkatalysators, eine sogenannte Ausspeicherphase oder Entladephase, eingeleitet werden. Während dieser zweiten Betriebsphase wird dem Abgas der Brennkraftmaschine ein Reduktionsmittel hinzugegeben, das eingespeicherte Stickoxide zu Stickstoff und Sauerstoff reduziert. Als Reduktionsmittel werden regelmäßig Kohlenwasserstoffe (HC) und/ oder Kohlenmonoxid (CO) verwendet, die im Abgas einfachst durch eine fette Einstellung des Kraftstoff-/Luftgemisches erzeugt werden können. Gegen Ende der Entladephase ist ein Großteil des eingespeicherten Stickoxids reduziert und immer weniger des Reduktionsmittels trifft auf Stickoxid, das es zu Sauerstoff und Stickstoff reduzieren kann. Deshalb steigt gegen Ende der Entladephase der Anteil an Reduktionsmittel in dem Abgas hinter dem Stickoxid-Speicherkatalysator an. Durch eine entsprechende Analyse des Abgases hinter dem Stickoxid-Speicherkatalysator mittels z. B. einem Sauerstoff-Sensor kann dann das Ende der Entladephase eingeleitet werden und wieder auf die Magerbetriebsphase umgeschaltet werden. Bei den bekannten Stickoxid-Speicherkatalysatoren wird dieses Umschalten in zeitlichen Abständen von z. B. 30 bis 60 Sekunden durchgeführt, wobei die Regeneration, d. h. die Entladephase, ca. 2 bis 4 Sekunden dauert.

Problematisch ist jedoch, dass bei den Stickoxid-Speicherkatalysatoren mit zunehmender Lebensdauer die Speicherfähigkeit für Stickoxide abnimmt. Denn vor allem der in den Kraftstoffen enthaltene Schwefel führt zu einer Speicherkatalysator-Vergiftung, d. h. zu einer dauerhaften Einlagerung des Schwefels im Speicherkatalysator, die die Speicherkapazität für die Stickoxide reduziert. Im Stickoxid-Speicherkatalysator werden die Stickoxide in Form von Nitraten eingelagert, während der Schwefel in Form von Sulfaten eingelagert wird. Da die Sulfate chemisch stabiler als die Nitrate sind, ist ein Sulfatzerfall bei der Stickoxid-Regeneration nicht möglich. Erst bei Katalysatortemperaturen oberhalb 650° C kann unter reduzierenden Bedingungen ein Schwefelaustrag erzielt werden. Derartige hohe Katalysator-Temperaturen werden insbesondere im Stadtverkehr jedoch regelmäßig nicht erreicht.

Zur Ermittlung eines Gütefaktors zur Bewertung der Speicherfähigkeit eines Stickoxid-Speicherkatalysators ist aus der gattungsbildenden WO 02/14658A1 ein Verfahren bekannt, bei dem von der Brennkraftmaschine erzeugte Stickoxide in einer ersten Betriebsphase (Magerphase) als Einspeicherphase für eine bestimmte Einspeicherzeit in den Stickoxid-Speicherkatalysator eingespeichert werden, und bei dem nach Ablauf der Einspeicherzeit zu einem bestimmten Umschaltzeitpunkt für eine bestimmte Entladezeit auf eine zweite Betriebsphase als Entladungsphase umgeschalten wird, in der die während der Einspeicherzeit eingespeicherten Stickoxide aus dem Stickoxid-Speicherkatalysator ausgespeichert werden. Weiter werden der Stickoxid-Massenstrom vor dem Stickoxid-Speicherkatalysator und/oder der Stickoxid-Massenstrom nach dem Stickoxid-Speicherkatalysator jeweils über eine gleiche Zeitdauer aufintegriert.

Diese Integralwerte werden hier miteinander in eine Relativbeziehung gesetzt. Damit soll hier ein Gütefaktor erhalten werden, der eine Aussage über die Speicherfähigkeit des Stickoxid-Speicherkatalysators ermöglicht, und zwar im Hinblick auf eine Katalysatoralterung durch eine Schwefelvergiftung bzw. eine thermische Schädigung oder ein alterungsbedingtes Nachlassen der Speicherfähigkeit. Insbesondere soll dadurch der Vergiftungsgrad des Katalysators mit Schwefel ermittelt werden und so der Schwefelgehalt in dem Steuergerät der Brennkraftmaschine korrigiert werden, um eine Schwefelregenerierung zu optimieren. Durch diese Aufintegration über die Zeitdauer sollen Auswirkungen von Schwankungen und Störungen der ermittelten Stickoxid-Massenstromwerte reduziert werden, da über eine bestimmte Zeitdauer gesehen eine Art Durchschnittswert des Gütefaktors erhalten wird, der aussagekräftiger sein soll als einzelne, zu bestimmten Zeiten erhaltene momentane Werte. Im praktischen Betrieb herrschen jedoch bei Stickoxid-Speicherkatalysatoren regelmäßig so komplexe Betriebsbedingungen vor, dass der Gütefaktor trotz der Bezugnahme auf eine bestimmte Zeitdauer unter Umständen nicht in ausreichendem Maße den tatsächlichen Zustand der Speicherfähigkeit des Stickoxid-Speicherkatalysators wiedergibt. Dies kann sich wiederum negativ auf den Kraftstoffverbrauch auswirken, da z. B. zu früh fettes Gemisch zugegeben wird. Eine Entladung selbst soll hier nur dann stattfinden, wenn die modellierte, eingespeicherte Stickoxidmasse einen bestimmten Grenzwert überschritten hat.

Ferner ist es in Verbindung mit dem Betreiben eines Stickoxid-Speicherkatalysators bekannt, die Alterung, insbesondere die Alterung durch Schwefelvergiftung, bei der Auslegung eines Stickoxid-Speicherkatalysators zu berücksichtigen, um sicherzustellen, dass die Katalysatoralterung über die vorgesehene Lebensdauer des Katalysators zur Einhaltung der vorgegebenen Abgasgrenzwerte im Hinblick auf die Stickoxidemissionen bei einem gealterten Stickoxid-Speicherkatalysator führt. Hierzu ist es bereits allgemein bekannt, die Anzahl der Entladungen so an die pro Be- und Entladezyklus ausgespeicherte Stickoxidmenge anzupassen, dass bei einer gegenüber einem neuen Stickoxid-Speicherkatalysator verringerten Speicherfähigkeit eines gealterten Stickoxid-Speicherkatalysators die während der Abgastest-Zeitspanne abgegebene Stickoxidmenge den vorgegebenen Abgasgrenzwert nicht überschreitet. Diese pro Beladezyklus vorgegebene Stickoxid-Abgabemenge für einen gealterten Speicherkatalysator ist eine absolute Größe und stellt den absoluten Stickoxid-Schlupf dar, d. h., dass sobald der Speicherkatalysator mit dieser Stickoxidmenge beladen ist, eine Entladung stattfindet. Dieser absolute Stickoxid-Schlupf als feststehender Wert gilt sowohl für den neuen als auch für den gealterten Stickoxid-Speicherkatalysator. Da pro Entladung ein fettes Gemisch von Lambda kleiner 1 benötigt wird, steigt mit der zunehmenden Zahl der Entladungen im Laufe des Alterns eines Speicherkatalysators auch der Kraftstoffverbrauch gegenüber demjenigen eines neuen Speicherkatalysators.

Aufgabe der Erfindung ist es daher, ein Verfahren zur Ermittlung des Alterungsgrades eines Stickoxid-Speicherkatalysators einer Brennkraftmaschine insbesondere eines Kraftfahrzeuges zu ermitteln, mit dem auf einfache Weise eine zuverlässige Bewertung des Alterungsgrades und damit der Speicherfähigkeit eines Stickoxid-Speicherkatalysators möglich ist für eine insbesondere hinsichtlich des Kraftstoffverbrauchs optimierte Betriebsweise des Stickoxid-Speicherkatalysators.

Diese Aufgabe wird gelöst mit den Merkmalen des Anspruchs 1.

Gemäß Anspruch 1 wird beim Erfüllen einer vorgebbaren Umschaltbedingung von der Einspeicherphase auf die Entladephase in einer ersten Stufe zur Ermittlung, des Alterungsgrades des Speicherkatalysators ein Umschalt-Betriebspunkt ermittelt. Dieser Umschalt-Betriebspunkt wird aus einer momentanen Betriebstemperatur zum Umschaltzeitpunkt und aus dem zum Umschaltzeitpunkt ermittelten Integralwert des Stickoxid-Massenstroms vor oder nach dem Speicherkatalysator und/oder aus dem Umschaltzeitpunkt selbst ermittelt. Der jeweilige Umschalt-Betriebspunkt wird in einer zweiten Stufe zur Ermittlung des Alterungsgrades des Speicherkatalysators mit einem über ein Temperaturfenster verlaufenden, vorgebbaren und insbesondere hinsichtlich des Kraftstoffverbrauchs optimierten Speicherkatalysator-Kapazitätsfeld, das durch eine Vielzahl von einzelnen Betriebspunkten für einen neuen und einen gealterten Speicherkatalysator gebildet ist, verglichen. Ein innerhalb des Speicherkatalysator-Kapazitätsfeldes liegender Umschalt-Betriebspunkt stellt keine Unterschreitung der minimalen Stickoxid-Speicherfähigkeit dar, sondern stellt die Änderung gegenüber dem vorherigen Betriebspunkt als Maß für die Speicherkatalysator-Alterung dar, während ein das Speicherkatalysator-Kapazitätsfeld verlassender Umschalt-Betriebspunkt eine Unterschreitung der minimalen Stickoxid-Speicherfähigkeit anzeigt.

Vorteilhaft wird mit einem derartigen Verfahren somit auf einfache Weise eine zuverlässige Bewertung des Alterungsgrades eines Stickoxid-Speicherkatalysators möglich, da durch die zusätzliche Bezugnahme auf eine momentane Betriebstemperatur zum Umschaltzeitpunkt ein Umschalt-Betriebspunkt ermittelt wird, der im Vergleich mit einem Speicherkatalysator-Kapazitätsfeld eine genaue, zuverlässige Aussage über den jeweiligen Alterungszustand des Stickoxid-Speicherkatalysators ermöglicht. Denn ein bereits zu regenerierender Speicherkatalysator kann unter günstigen Betriebsbedingungen, d. h. insbesondere optimalen Betriebstemperaturen regelmäßig noch mit einer geringeren Anzahl von Entladungen auskommen als dies bei demgegenüber ungünstigeren Betriebstemperaturen der Fall wäre. Dies bedeutet, dass durch die geringere Anzahl von Entladungen im optimierten Betriebsbereich kein so hoher Kraftstoffverbrauch vorliegt als dies bei ungünstigeren Betriebsbedingungen der Fall ist, bei denen derselbe Speicherkatalysator öfter entladen werden muss. Das heißt, dass mit der erfindungsgemäßen Verfahrensweise bereits auch in solchen Betriebszuständen, in denen noch optimierte Betriebsbedingungen vorliegen, eine Aussage getroffen werden kann, ob der Speicherkatalysator bereits zu regenerieren ist oder nicht. Die Regenerierung wird hier durch die Bezugnahme auf die Betriebstemperatur des Speicherkatalysators zum richtigen und damit optimalen Zeitpunkt erkannt, was sich positiv auf den Kraftstoffverbrauch auswirkt, da ein Betrieb des Speicherkatalysators nur im hinsichtlich des Kraftstoffverbrauchs erwünschten Betriebsbereich erfolgt.

Nach Anspruch 2 kann zur Festlegung des Umschaltzeitpunktes ein relativer Stickoxid-Schlupf als Differenz zwischen dem in den Stickoxid-Katalysator eingeströmten Stickoxid-Massenstrom und dem aus dem Stickoxid-Speicherkatalysator ausgeströmten Stickoxid-Massenstrom jeweils bezogen auf die Einspeicherzeit ermittelt werden dergestalt, dass der Quotient der Integralwerte des Stickoxid-Massenstroms vor und nach dem Stickoxid-Speicherkatalysator zudem in eine Relativbeziehung mit einem vorgebbaren, von einem Abgasgrenzwert abgeleiteten Stickoxid-Konvertierungsgrad gebracht wird, so dass beim Vorliegen dieser vorgegebenen Umschaltbedingung das Umschalten von der Einspeicherphase auf die Entladephase zum hinsichtlich Kraftstoffverbrauch und Einspeicherpotential optimierten Umschaltzeitpunkt durchgeführt wird.

Vorteilhaft wird hier als Bezugsgröße für das Umschalten auf die in eine Relativbeziehung zueinander gebrachten Zeitintegrale der Stickoxidmenge vor und nach dem Stickoxid-Speicherkatalysator in Verbindung mit einem vorgebbaren Konvertierungsgrad abgestellt. Das heißt, dass bei dieser Entladestrategie die Endrohremissionen bezüglich Stickoxid weitgehend unabhängig vom Alterungszustand des Katalysators sind und des weiteren das Abgasergebnis auch weitgehend unabhängig von der Anzahl der Entladungen pro Zeiteinheit ist. Mit einer derartigen Betriebsweise kann vorteilhaft die jeweils im Katalysator vorhandene Einspeicherungskapazität voll ausgenützt werden, was sich beim neuen bzw. neueren Katalysator in einem gegenüber einem gealterten Speicherkatalysator reduzierten Kraftstoffverbrauch niederschlägt, da der neue bzw. neuere Katalysator weniger oft entladen zu werden braucht als ein gealterter Katalysator, da der relative Schlupf, bei dem entladen werden soll, erst zu einem späteren Zeitpunkt als dies beim gealterten Speicherkatalysator der Fall ist, erreicht wird. Beim gealterten Speicherkatalysator steigt bei der Betriebsweise in Verbindung mit dem relativen Schlupf nur die Anzahl der Entladungen, wobei diese jedoch weitgehend unabhängig vom Abgasergebnis als solchem sind. Denn mit dieser Betriebswiese wird stets nur dann entladen, wenn dies erforderlich wird, um nicht den vorgegebenen Abgasgrenzwert pro Zeiteinheit zu überschreiten, da die aufintegrierten Stickoxid-Massenströme vor und nach dem Stickoxid-Speicherkatalysator hier in Bezug zu dem für die Einhaltung eines Abgasgrenzwertes erforderlichen Konvertierungsgrad gesetzt werden. Im Gegensatz zur Betriebsweise gemäß dem Stand der Technik braucht aufgrund der Ausnutzung des vollen Einspeicherpotentials ein neuer Speicherkatalysator auf eine bestimmte Zeitdauer gesehen weniger oft entladen werden, als dies beim neuen Speicherkatalysator gemäß dem Stand der Technik der Fall ist, bei dem das Einspeicherpotential eines neuen Speicherkatalysators nicht voll ausgenutzt werden kann. Denn bei der Betriebsweise gemäß dem Stand der Technik gilt die pro Entladung vorgegebene absolute Stickoxid-Schlupfmenge als fester Wert sowohl für den alten als auch für den neuen Speicherkatalysator, so dass auch der neue Speicherkatalysator beim Stand der Technik stets dann eine Entladung durchzuführen hat, wenn dieser von vornehherein festgelegte absolute Stickoxid-Schlupf erreicht ist, und dies obwohl hier der neue Stickoxid-Speicherkatalysator noch weiter Stickoxide einlagern könnte. Im Gegensatz dazu wird bei der Betrachtungsweise durch die Relativbeziehung stets das gesamte momentane Einspeicherpotential ausgenutzt, so dass gegenüber der Betriebsweise beim Stand der Technik insbesondere bezogen auf einen neuen bzw. neueren Speicherkatalysator eine erhebliche Kraftstoffeinsparung erzielt wird. Denn bei der Betriebsweise gemäß dem Stand der Technik wird, da beim neuen bzw. neueren Speicherkatalysator die Entladung bereits früher als erforderlich eingeleitet wird, auch ein fettes Gemisch früher als nötig zugegeben.

Bevorzugt ist das Speicherkatalysator-Kapazitätsfeld bezogen auf das Temperaturfenster nach Anspruch 3 einerseits durch eine Grenzlinie für einen neuen Speicherkatalysator und andererseits durch eine Grenzlinie für einen einen Grenzalterungszustand darstellenden gealterten Speicherkatalysator begrenzt. Das heißt, dass der zwischen diesen beiden Grenzkurven liegende Bereich des Speicherkatalysator-Kapazitätsfeldes ein Maß für die Katalysatoralterung darstellt. Die Grenzlinie für den einen Grenzalterungszustand darstellenden gealterten Speicherkatalysator kann je nach den individuellen Erfordernissen gewählt werden, das heißt z. B. in Abhängigkeit vom vorgegebenen, gerade noch tolerierbaren erhöhten Kraftstoffverbrauch in Verbindung mit einem gealterten Speicherkatalysator und/oder einer vorgegebenen Speicherkatalysator-Standzeit.

Besonders bevorzugt umfasst das Temperaturfenster nach Anspruch 4 Temperaturwerte zwischen in etwa 200°C und in etwa 450°C, wobei z. B. ein optimaler Betriebspunkt im Bereich von 280°C bis 320°C liegt.

Besonders bevorzugt ist nach Anspruch 5 ein Verfahren, bei dem bei Unterschreitung der minimalen Stickoxid-Speicherfähigkeit ein Fehlersignal im Motorsteuergerät gesetzt wird, so dass z. B. ein Austausch des Stickoxid-Speicherkatalysators vorgenommen werden kann, um die Brennkraftmaschine weiterhin mit niedrigem Kraftstoffverbrauch betreiben zu können.

Gemäß einer besonders bevorzugten Verfahrensführung ist nach Anspruch 6 vorgesehen, dass der relative Schlupf der Quotient aus dem Integral über den Stickoxid-Massenstrom nach dem Stickoxid-Katalysator und aus dem Integral über dem Stickoxid-Massenstrom vor dem Stickoxid-Speicherkatalysator ist. Dieser Quotient wird zur Ermittlung der Umschaltbedingung gleich einem vorgebbaren Umschaltschwellwert K gesetzt, der auf den vorgebbaren Stickoxid-Konvertierungsgrad zurückgeht, so dass beim Erfüllen dieser Umschaltbedingung ein Umschalten von der Einspeicherphase am Ende der somit ermittelten Einspeicherzeit auf die Entladungsphase erfolgt. Beispielsweise genügt dieser Umschaltschwellwert K nach Anspruch 7 folgender Gleichung:

$$K = 1 - \text{vorgegebene Stickoxidkonvertierungsrate}$$

Die vorgegebene Stickoxid-Konvertierungsrate ist dabei stets kleiner 1, beträgt vorzugsweise jedoch wenigstens 0,8, höchst bevorzugt im Hinblick auf die Euro-IV-Abgasgrenzwertnorm jedoch in etwa 0,95.

Nach Anspruch 8 wird der Stickoxid-Massenstrom vor dem Stickoxid-Speicherkatalysator modelliert. Grundsätzlich könnte dieser Stickoxid-Massenstrom vor dem Stickoxid-Speicherkatalysator jedoch auch gemessen werden, z. B. mittels eines Stickoxid-Sensors. Ein derartiger Stickoxid-Sensor wird nach Anspruch 9 vorteilhaft jedoch nach dem Stickoxid-Speicherkatalysator vorgesehen, um den Stickoxid-Massenstrom nach dem Stickoxid-Speicherkatalysator zu messen. Insbesondere für die Zeiten, in denen der Stickoxid-Sensor nicht betriebsbereit ist, kann der Stickoxid-Massenstrom nach dem Stickoxid-Speicherkatalysator auch modelliert werden. Unter Modellierung wird dabei verstanden, dass der Stickoxid-Rohmassenstrom vor dem Stickoxid-Speicherkatalysator bzw. der Stickoxid-Massenstrom nach dem Stickoxid-Speicherkatalysator einem Stickoxid-Einspeichermodell bzw. einem Stickoxid-Rohemissionsmodell entnommen werden. In den Modellen wird z. B. aus dem Betriebspunkt der Brennkraftmaschine beschreibenden Parametern, z. B. der zugeführten Kraftstoffmasse oder Luftmasse, dem Drehmoment, etc., der Stickoxid-Rohmassenstrom modelliert. Ebenso kann der modellierte Stickoxid-Rohmassenstrom aber auch einer Kennlinie oder einem Kennfeld entnommen werden.

Gemäß einer besonders bevorzugten Ausführungsform nach Anspruch 10 wird ein mittels dem Stickoxid-Sensor nach dem Stickoxid-Speicherkatalysator gemessenes Stickoxid-Massenstromsignal einer Steuer- und Regeleinrichtung zugeführt, in der der nach dem Stickoxid-Speicherkatalysator gemessene Stickoxid-Massenstrom über die Zeit aufintegriert wird und der so ermittelte Integralwert zusammen mit dem Integralwert des Stickoxid-Massenstroms vor dem Stickoxid-Speicherkatalysator in eine Beziehung mit dem vorgebbaren Stickoxid-Konvertierungsgrad gebracht wird zur Ermittlung des Umschaltzeitpunktes. Bei Vorliegen der Umschaltbedingung gibt dann die Steuerung- und Regeleinrichtung ein Steuersignal ab, um das Umschalten des Stickoxid-Speicherkatalysators von der Einspeicherphase auf die Entladephase durchzuführen. Die erfindungsgemäße Verfahrensführung bewirkt somit hier auch einen besonders günstigen bauteiltechnischen Aufwand, da keine zusätzlichen Bauteile erforderlich sind, sondern die ohnehin vorhandenen Bestandteile zur erfindungsgemäßen Betriebsweise benützt werden können.

Die Erfindung wird nachfolgend anhand einer Zeichnung näher erläutert.

Es zeigen:

Fig. 1    ein Diagramm der Stickoxidmenge über der Zeit für einen neuen Stickoxid-Speicherkatalysator,

Fig. 2    ein schematisches Diagramm der Stickoxidmenge über der Zeit für einen gealterten Stickoxid-Speicherkatalysator,

Fig. 3    eine schematische vergleichende Darstellung der Entladezyklen eines neuen und gealterten Stickoxid-Speicherkatalysators,

Fig. 4    ein schematisches Diagramm des Verbrauchs über den Emissionen mit Applikationslinien für einen neuen und einen alten Stickoxid-Speicherkatalysator im Vergleich,

Fig. 5    eine schematische Darstellung eines Speicherkatalysator-Betriebsfeldes über ein Temperaturfenster, und

Fig. 6    eine schematische Darstellung der Stickoxidmenge über der Zeit für eine Betriebsweise gemäß dem Stand der Technik.

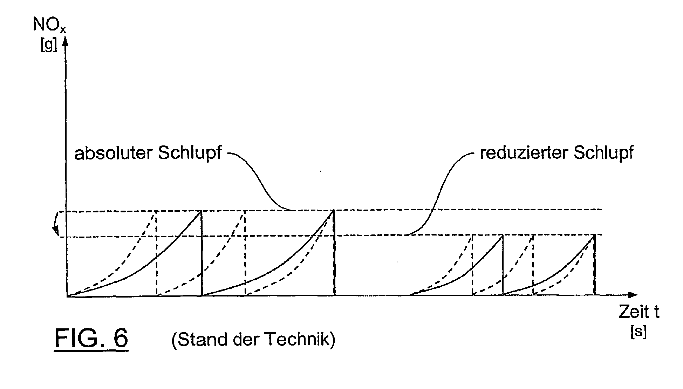

In Fig. 6 ist eine schematische Darstellung der Stickoxidmenge über der Zeit für eine Betriebsweise eines Stickoxid-Speicherkatalysators gemäß dem Stand der Technik dargestellt. So ist hier im linken Teil des Diagramms bezogen auf den fest vorgegebenen absoluten Stickoxid-Schlupf die maximale Einspeicherzeit dargestellt, und zwar mit durchgezogenen Linien für den neuen Speicherkatalysator und strichliert für den gealterten Speicherkatalysator. Rein schematisch ist hier dargestellt, dass die Anzahl der Entladungen beim gealterten Speicherkatalysator höher ist, so dass, da jedes Mal in etwa eine gleiche Menge an Stickoxiden pro Zeiteinheit eingespeichert ist, während einer bestimmten Zeitspanne beim gealterten Stickoxidkatalysator eine höhere Stickoxidmenge abgegeben wird als dies während der gleichen Zeitspanne beim neuen Speicherkatalysator der Fall ist. Dies führt dazu, dass hier die Anzahl der Entladungen pro Zeitspanne direkt in das Abgasergebnis mit eingeht und somit in Bezug auf die Einhaltung der Abgasgrenzwerte pro vorgegebener Abgasgrenzwert-Zeiteinheit auf die Anzahl der möglichen Entladungen eines gealterten Speicherkatalysators am Ende dessen Lebensdauer abzustellen ist und daher der fest vorgegebene absolute Schlupfwert entsprechend reduziert werden muss, um die Abgasnorm zu erfüllen. Dies ist im rechten Teil des Diagramms schematisch dargestellt und führt somit dazu, dass das Einspeicherpotenzial des neuen Speicherkatalysators nicht ausgenutzt wird. Da nun aber bei dieser Betriebsweise - auf Grund des fest vorgegebenen absoluten Schlupfes - beim neuen Speicherkatalysator die Entladung bereits früher als eigentlich nötig eingeleitet wird, wirkt sich dies beim neuen Speicherkatalysator nachteilig auf den Kraftstoffverbrauch aus, da ein fetteres Gemisch früher als nötig zugegeben wird. Das heißt, dass bezogen auf eine bestimmte Zeitspanne eigentlich mehr fettes Gemisch zugegeben wird als dies während dieser Zeitspanne erforderlich gewesen wäre, wenn die eigentlich vorhandene Speicherkapazität eines neuen bzw. neueren Speicherkatalysators vollständig ausgenutzt worden wäre.

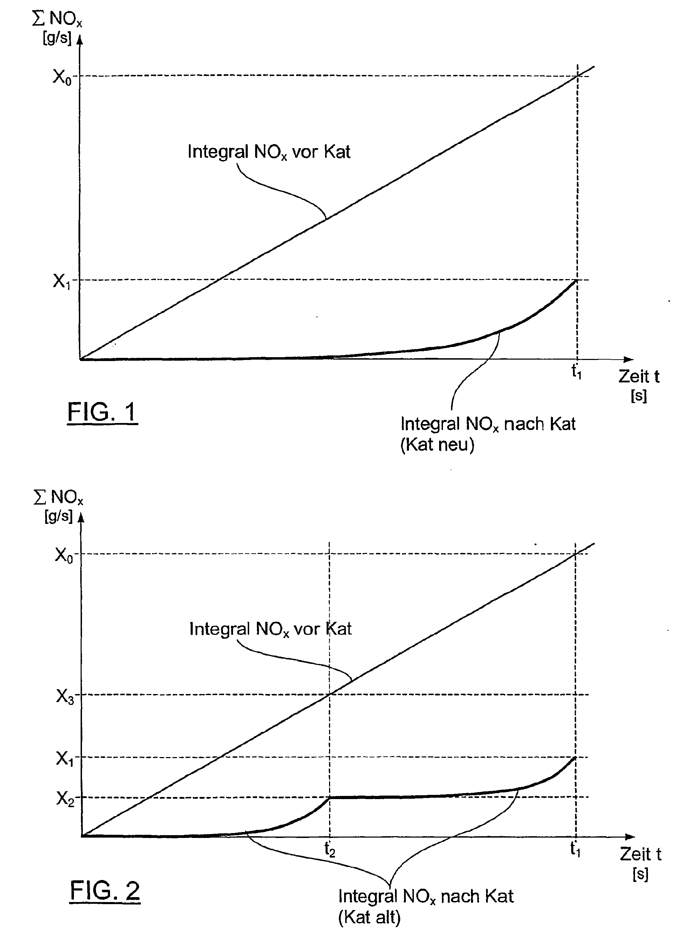

In den Fig. 1 und 2 ist lediglich zur Veranschaulichung des Prinzips einer konkreten Verfahrensweise schematisch und beispielhaft jeweils die Stickoxidmenge über der Zeit aufgetragen, wobei die Stickoxidmenge aufsummiert dargestellt ist. Ausgehend von einer lediglich zur einfacheren Veranschaulichung angenommenen konstanten Anlieferung einer konstanten Stickoxidmenge über der Zeit ergibt das Integral über den Stickoxid-Massenstrom vor dem Stickoxid-Speicherkatalysator über die betrachtete Zeitspanne einen linearen Anstieg, wie dies in den Fig. 1 und 2 schematisch dargestellt ist. Bei einem neuen Stickoxid-Speicherkatalysator ist noch die volle Speicherkapazität vorhanden, d. h., es hat noch z. B. keine Vergiftung durch Schwefel stattgefunden, so dass für eine Einspeicherzeit $t_1$ so lange Stickoxide in den Stickoxid-Speicherkatalysator eingelagert werden, bis der Quotient aus dem Integral über den Stickoxid-Massenstrom nach dem Stickoxid-Speicherkatalysator und aus dem Integral über den Stickoxid-Massenstrom vor dem Stickoxid-Speicherkatalysator gleich einem vorgegebenen, von einem Abgasgrenzwert abgeleiteten Umschaltschwellwert K ist, der auf einen vorgegebenen, von einem Abgasgrenzwert abgeleiteten Stickoxid-Konvertierungsgrad zurückgeht, so dass beim Erfüllen dieser Umschaltbedingung nach Ablauf der Einspeicherzeit $t_1$ ein Umschalten auf eine hier nicht mehr dargestellte Entladungsphase erfolgt, in der fettes Gemisch zum Ausspeichern der Stickoxide zugeführt wird. Beispielsweise beträgt der Umschaltschwellwert K bei einer vorgegebenen Stickoxid-Konvertierungsrate von 95 %, d. h. von 0,95, dann 0,05 bezogen auf 1 (= 100 %) als Bezugsgröße. Dies bedeutet, dass im vorliegenden Fall eines neuen Stickoxid-Speicherkatalysators dann die Entladungsphase eingeleitet wird, wenn der Quotient aus den beiden oben angegebenen Integralen gleich 0,05 oder 5 % ist.

In der Fig. 2 ist nun im wesentlichen dasselbe für einen gealterten Stickoxid-Speicherkatalysator dargestellt, d. h. bei einem Stickoxid-Speicherkatalysator der z. B. bereits stark mit Schwefel vergiftet ist. Wie dies aus der lediglich schematisch und beispielhaften Darstellung der Fig. 2 ersichtlich wird, sind bei einem derartigen gealterten Stickoxid-Speicherkatalysator innerhalb der gleichen betrachteten Zeitspanne $t_1$ z. B. lediglich zwei Entladungen erforderlich, und zwar einmal nach einer Zeit $t_2$, die vor der Zeit $t_1$ liegt, und dann wiederum zum Zeitpunkt $t_1$, der dem Zeitpunkt $t_1$ der Fig. 1 entspricht. Durch den relativen Schlupf als Quotienten aus dem Integral über den Stickoxid-Massenstrom nach und vor dem Stickoxid-Speicherkatalysator und dessen in Beziehung setzen mit einem vorgegebenen, von einem Abgasgrenzwert ableitbaren Stickoxid-Konvertierungsgrad wird erreicht, dass zum Umschaltzeitpunkt, zu dem die Umschaltbedingung erfüllt ist, der Quotient der Integralwerte $X_2$ und $X_3$ zum Zeitpunkt $t_2$ und der Quotient der Integralwerte $X_1$ und $X_0$ zum Zeitpunkt $t_1$ sowie auch der Quotient aus der Differenz der Integralwerte $X_1 - X_2$ und $X_0 - X_3$ zum Zeitpunkt $t_1$ stets gleich dem vorgegebenen Umschaltschwellwert K ist. Ebenso entspricht der Quotient der Integralwerte $X_1$ und $X_0$ zum Zeitpunkt $t_1$ (Umschaltzeitpunkt) der Fig. 1, d. h. beim neuwertigen Stickoxid-Speicherkatalysator diesem Umschaltschwellwert K, so dass durch die erfindungsgemäße Bezugnahme auf den Stickoxid-Konvertierungsgrad stets sichergestellt ist, dass eine Entladung dann stattfindet, wenn dies zur Erfüllung der auf einen bestimmten Abgasgrenzwert zurückgehenden Konvertierungsgrad erforderlich ist. D. h., dass die jeweils im Stickoxid-Speicherkatalysator vorhandene Einspeicherungskapazität entsprechend dem Alterungszustand des Stickoxid-Speicherkatalysators voll ausgenutzt werden kann.

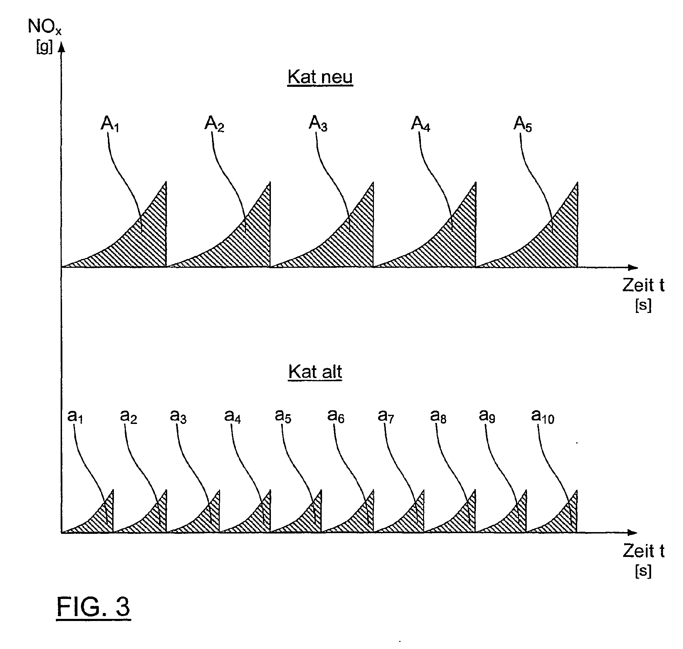

Wie dies insbesondere aus der Fig. 3 hervorgeht, wird durch diese Verfahrensweise erreicht, dass der Abgasgrenzwert stets eingehalten wird, da die Anzahl der Entladungen zwar mit zunehmender Alterung des Katalysators ansteigt, diese jedoch keinerlei Einfluss auf die Abgasmengen als solche hat, da die Anzahl der Entladungen zu jedem Alterungszeitpunkt so optimal an die erforderliche Konvertierungsrate und damit den vorgegebenen Abgasgrenzwert angepasst wird, dass dieser Abgasgrenzwert und damit die erforderliche Konvertierungsrate pro Abgasgrenzwert-Zeitspanne nicht überschritten wird. So entspricht die in der Fig. 3 auf der oberen Abszisse pro Entladevorgang abgegebene und schraffiert dargestellte Abgasmenge als Summe der Abgasmengen $A_1$, $A_2$, $A_3$, $A_4$ und $A_5$, wobei hier für den Sonderfall Konstantbetriebspunkt der Brennkraftmaschine $A_1 = A_2 = A_3 = A_4 = A_5$ ist, genau der auf der unteren Abszisse dargestellten Abgasmenge als Summe der Flächen $a_1$ bis $a_{10}$, wobei auch hier für den Sonderfall Konstantbetriebspunkt der Brennkraftmaschine $a_1 = a_2 = a_3 = ... = a_{10}$ ist. Zudem ist hier die Summe der Flächenintegrale der Nach-Katemissionen beim neuen und beim gealterten Speicherkatalysator nahezu gleich.

Das heißt, dass über die gleiche Zeitspanne betrachtet beim gealterten Stickoxid-Speicherkatalysator nur die Zahl der Entladungen steigt, nicht jedoch die während dieser Zeitspanne abgegebene Stickoxidmenge, so dass ein vorgegebener Emissionsgrenzwert als Abgasgrenzwert dadurch stets eingehalten werden kann.

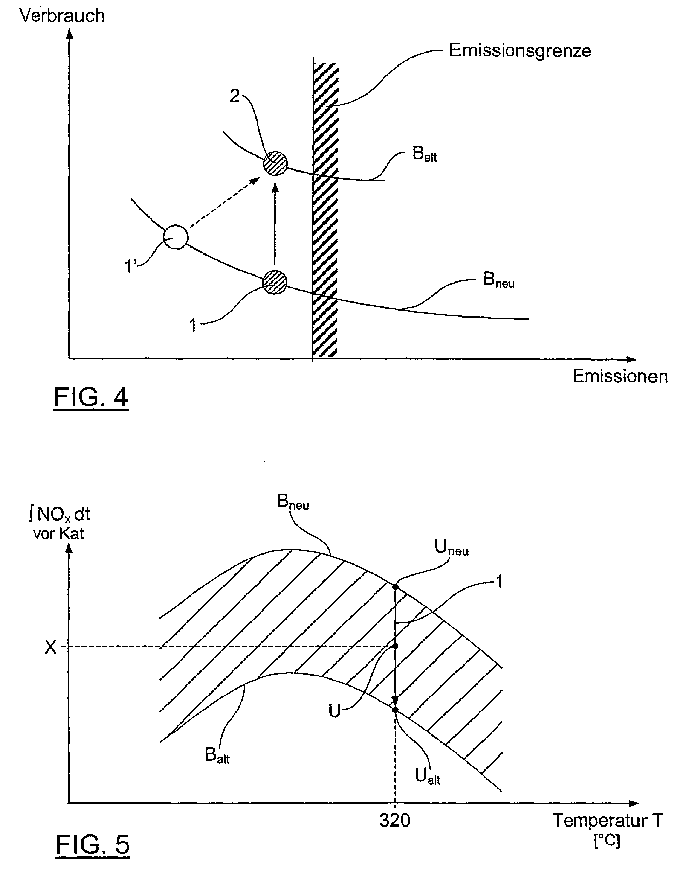

Der Vorteil dieser Verfahrensführung zeigt sich auch im in der Fig. 4 dargestellten Diagramm des Kraftstoffverbrauchs über den Emissionen. In diesem Diagramm ist einmal die Betriebslinie als Applikationslinie $B_{neu}$ für einen neuen Stickoxid-Speicherkatalysator und eine Betriebslinie als Applikationslinie $B_{alt}$ für einen gealterten Stickoxid-Speicherkatalysator dargestellt. Dieses Diagramm zeigt, dass der Stickoxid-Speicherkatalysator, wie dies in der Fig. 4 durch Bezugszeichen 1 gezeigt ist, mit niedrigem Verbrauch ohne ein Vorhalten der Katalysatoralterung, wie dies bei der Verfahrensführung gemäß dem Stand der Technik der Fall ist und dies in der Fig. 4 mit 1' und strichliert eingezeichnet ist, möglich ist, so dass im Verlauf der Katalysatoralterung durch die gesteigerte Anzahl der Entladungen zwar der Verbrauch ansteigt, jedoch keine Überschreitung der Emissionsgrenze erfolgt. Im Gegensatz zur Betriebsweise gemäß dem Stand der Technik ist hier zwar bei der erfindungsgemäßen Betriebsweise das Abgasergebnis beim neuen Speicherkatalysator "schlechter", liegt jedoch dauerhaft unter dem vorgeschriebenen Abgasgrenzwert. Das heißt, dass mit dieser Betriebsweise eine stets optimierte Betriebsweise möglich ist, ohne dass ein unnötiges Vorhalten beim neuen Speicherkatalysator stattfindet.

In der Fig. 5 ist nunmehr ein Speicherkatalysator-Kapazitätsfeld über ein Temperaturfenster dargestellt, wobei auf der Abszisse hier die Temperatur in °C aufgetragen ist und die Ordinate hier den Integralwert des Stickoxid-Massenstroms vor dem Speicherkatalysator zeigt. Das heißt, dass das hier dargestellte Speicherkatalysator-Kapazitätsfeld bezogen auf die Integralwerte des Stickoxid-Massenstroms vor dem Speicherkatalysator dargestellt ist. Grundsätzlich könnte hier aber alternativ auch ein Speicherkatalysator-Kapazitätsfeld dargestellt sein, das auf die Integralwerte nach dem Stickoxid-Speicherkatalysator und/oder auf die Zeit bezogen ist. Die Bezugnahme auf die Integralwerte vor dem Stickoxid-Massenstrom ist hier jedoch bevorzugt, da diese im Gegensatz zu den auch noch von anderen Faktoren abhängigen Integralwerten nach dem Speicherkatalysator und der ebenfalls noch von anderen Faktoren abhängigen Zeit eine noch zuverlässigere Aussage über den Alterungszustand des Speicherkatalysators ermöglicht. Wie Fig. 5 zeigt, ist das Speicherkatalysator-Kapazitätsfeld bezogen auf das Temperaturfenster einerseits durch eine vorgegebene Grenzlinie $B_{neu}$ für einen neuen Speicherkatalysator und andererseits durch eine vorgebbare Grenzlinie $B_{alt}$ für einen einen Grenzalterungszustand darstellenden gealterten Speicherkatalysator begrenzt. Der dazwischenliegende, schraffierte Kapazitätsfeldbereich ist ein Maß für die Katalysatoralterung. Das Speicherkatalysator-Kapazitätsfeld ist hinsichtlich des Kraftstoffverbrauchs optimiert vorgegeben und durch eine Vielzahl von einzelnen, z. B. messtechnisch ermittelten Betriebspunkten für einen neuen und einen mehr oder weniger gealterten Speicherkatalysator aufgespannt.

Im hier in der Fig. 5 dargestellten Fall wird ein Integralwert X eines Stickoxid-massenstroms vor dem Speicherkatalysator beim Erfüllen der Umschaltbedingung in Verbindung mit der momentanen Betriebstemperatur zum Umschaltzeitpunkt gebracht, die hier beispielsweise 320°C beträgt. Auf diese Weise wird im Diagramm der Fig. 5 ein Umschalt-Betriebspunkt U ermittelt, der im in der Fig. 5 dargestellten Beispiel im Speicherkatalysator-Kapazitätsfeld liegt. Dieser innerhalb des Speicherkatalysator-Kapazitätsfeldes liegende Umschalt-Betriebspunkt stellt keine Unterschreitung der minimalen Stickoxid-Speicherfähigkeit dar, so dass z. B. ein i. O.-Signal an die Steuer- und/oder Regeleinrichtung weitergeleitet wird. Die Änderung gegenüber einem vorhergehenden Betriebspunkt ausgehend von einem Betriebspunkt $U_{neu}$ eines neuen Stickoxid-Speicherkatalysators stellt, wie dies in Fig. 5 schematisch durch den Pfeil 1 dargestellt ist, ein Maß für die Speicherkatalysatoralterung dar. D. h. dass der Integralwert des Stickoxid-Massenstroms vor dem Speicherkatalysator beim Regenerieren stets neu erlernt wird. Wenn eine Änderung in Richtung des Pfeiles 1 dergestalt stattgefunden hat, dass ein Betriebspunkt unterhalb eines Grenz-Betriebspunktes $U_{alt}$ liegt, wird ein Unterschreiten der minimalen Stickoxid-Speicherfähigkeit erkannt und ein Fehlersignal im Motorsteuergerät gesetzt.

Die Fig. 5 zeigt hier somit, dass zu jedem Betriebszustand des Stickoxid-Speicherkatalysators in Abhängigkeit von der Betriebstemperatur eine Aussage über den genauen Alterungszustand des Stickoxid-Speicherkatalysators getroffen werden kann. Da die einen Grenzalterungszustand darstellende untere gealterte Speicherkatalysator-Grenzlinie von der Lage her an einen vorgegebenen Kraftstoffverbrauch in Verbindung mit den Entladungen angepasst werden kann, kann daher eine nicht mehr tolerierbare Speicherkatalysator-Alterung bereits zu einem Zeitpunkt angezeigt werden, zu dem sich der Kraftstoffverbrauch noch im vorgegebenen Toleranzrahmen hält.

**Patentansprüche**

1.  Verfahren zur Ermittlung des Alterungsgrades eines Stickoxid-Speicherkatalysators einer Brennkraftmaschine insbesondere eines Kraftfahrzeuges, bei dem von der Brennkraftmaschine erzeugte Stickoxide in einer ersten Betriebsphase (Magerphase) als Einspeicherphase für eine bestimmte Einspeicherzeit in den Stickoxid-Speicherkatalysator eingespeichert werden, und beim Erfüllen einer vorgebbaren Umschaltbedingung zu einem bestimmten Umschaltzeitpunkt für eine bestimmte Entladezeit auf eine zweite Betriebsphase als Entladungsphase umgeschalten wird, in der die während der Einspeicherzeit eingespeicherten Stickoxide aus dem Stickoxid-Speicherkatalysator ausgespeichert werden, wobei der Stickoxid-Massenstrom vor dem Stickoxid-Speicherkatalysator und/oder der Stickoxid-Massenstrom nach dem Stickoxid-Speicherkatalysator jeweils über eine gleiche Zeitdauer aufintegriert werden,

**dadurch gekennzeichnet,**

**dass** in einer ersten Stufe zur Ermittlung des Alterungsgrades des Speicherkatalysators ein Umschalt-Betriebspunkt (U) ermittelt wird, wobei der Umschalt-Betriebspunkt (U)

a) aus einer momentanen Betriebstemperatur zum Umschaltzeitpunkt, und

b) aus dem zum Umschaltzeitpunkt ermittelten Integralwert (X) des Stickoxid-Massenstroms vor oder nach dem Speicherkatalysator und/oder aus dem Umschaltzeitpunkt

ermittelt wird,

**dass** der jeweilige Umschalt-Betriebspunkt (U) in einer zweiten Stufe zur Ermittlung des Alterungsgrades des Speicherkatalysators mit einem über ein Temperaturfenster verlaufenden, vorgebbaren, insbesondere hinsichtlich des Kraftstoffverbrauchs optimierten Speicherkatalysator-Kapazitätsfeld, das durch eine Vielzahl von einzelnen Betriebspunkten für einen neuen und einen gealterten Speicherkatalysator gebildet ist, verglichen wird dergestalt,

**dass** ein innerhalb des Speicherkatalysator-Kapazitätsfeldes liegender Umschatt-Betriebspunkt keine Unterschreitung der minimalen Stickoxid-Speicherfähigkeit darstellt, sondern die Änderung gegenüber dem vorherigen Betriebspunkt als Maß für die Speicherkatalysator-Alterung darstellt, und

**dass** ein das Speicherkatalysator-Kapazitätsfeld verlassender Umschalt-Betriebspunkt eine Unterschreitung der minimalen Stickoxid-Speicherfähigkeit darstellt.

2. Verfahren nach Anspruch 1, **dadurch gekennzeichnet, dass** zur Festlegung des Umschaltzeitpunktes von der Einspeicherphase auf die Entladephase ein relativer Stickoxid-Schlupf als Differenz zwischen dem in den Stickoxid-Speicherkatalysator eingeströmten Stickoxid-Massenstrom und dem aus dem Stickoxid-Speicherkatalysator ausgeströmten Stickoxid-Massenstrom jeweils bezogen auf die Einspeicherzeit ermittelt wird dergestalt, dass der Quotient der Integralwerte des Stickoxid-Massenstroms vor und nach dem Stickoxid-Speicherkatalysator zudem in eine Relativbeziehung mit einem vorgebbaren, von einem Abgasgrenzwert abgeleiteten Stickoxid-Konvertierungsgrad gebracht wird , so dass beim Vorliegen dieser vorgegebenen Umschaltbedingung das Umschalten von der Einspeicherphase auf die Entladephase zum hinsichtlich Kraftstoffverbrauch und Einspeicherpotential optimierten Umschaltzeitpunkt durchgeführt wird.

3. Verfahren nach Anspruch 1 oder 2, **dadurch gekennzeichnet, dass** das Speicherkatalysator-Kapazitätsfeld bezogen auf das Temperaturfenster einerseits durch eine Grenzlinie für einen neuen Speicherkatalysator und andererseits durch eine Grenzlinie für einen einen Grenzalterungszustand darstellenden gealterten Speicherkatalysator begrenzt ist.

4. Verfahren nach einem der Ansprüche 1 bis 3, **dadurch gekennzeichnet, dass** das Temperaturfenster Temperaturwerte zwischen in etwa 200°C und in etwa 450°C umfasst.

5. Verfahren nach einem der Ansprüche 1 bis 4, **dadurch gekennzeichnet, dass** bei Unterschreitung der minimalen Stickoxid-Speicherfähigkeit ein Fehlersignal im Motorsteuergerät gesetzt wird.

6. Verfahren nach einem der Ansprüche 2 bis 5, **dadurch gekennzeichnet,**

**dass** der relative Schlupf der Quotient aus dem Integral über den Stickoxid-Massenstrom nach dem Stickoxid-Speicherkatalysator und aus dem Integral über den Stickoxid-Massenstrom vor dem Stickoxid-Speicherkatalysator ist, und

**dass** dieser Quotient zur Ermittlung der Umschaltbedingung gleich einem vorgebbaren Umschaltschwellwert K gesetzt wird, der auf den vorgebbaren Stickoxid-Konvertierungsgrad zurückgeht, so dass beim Erfüllen dieser Umschaltbedingung ein Umschalten von der Einspeicherphase am Ende der somit ermittelten Einspeicherzeit auf die Entladungsphase erfolgt.

7. Verfahren nach Anspruch 6, **dadurch gekennzeichnet, dass** der Umschaltschwellwert K folgender Gleichung genügt:

# K = 1 – vorgegebene Stickoxidkonvertierungsrate

mit einer vorgegebenen Stickoxid-Konvertierungsrate von kleiner 1, vorzugsweise mit einer vorgegebenen Stickoxid-Konvertierungsrate von wenigstens 0,80, höchst bevorzugt von 0,95.

8. Verfahren nach einem der Ansprüche 1 bis 7, **dadurch gekennzeichnet, dass** der Stickoxid-Massenstrom vor dem Stickoxid-Speicherkatalysator modelliert wird.

9. Verfahren nach einem der Ansprüche 1 bis 8, **dadurch gekennzeichnet, dass** der Stickoxid-Massenstrom nach dem Stickoxid-Speicherkatalysator mittels einem Stickoxid-Sensor gemessen wird.

10. Verfahren nach Anspruch 9, **dadurch gekennzeichnet, dass** ein mittels dem Stickoxid-Sensor nach dem Stickoxid-Speicherkatalysator gemessenes Stickoxid-Massenstromsignal einer Steuer- und Regeleinrichtung zugeführt wird, in der der nach dem Stickoxid-Speicherkatalysator gemessene Stickoxid-Massenstrom über die Zeit aufintegriert wird und der so ermittelte Integralwert zusammen mit dem Integralwert des Stickoxid-Massenstroms vor dem Stickoxid-Speicherkatalysator in eine Beziehung mit dem vorgebbaren Stickoxid-Konvertierungsgrad gebracht wird zur Ermittlung des Umschaltzeitpunktes, wobei die Steuer- und Regeleinrichtung bei Vorliegen der Umschaltbedingung ein Steuersignal abgibt zum Umschalten des Stickoxid-Speicherkatalysators von der Einspeicherphase auf die Entladephase.

## Claims

1. Method for determining the degree of ageing of a nitric oxide storage catalyst of an internal combustion engine, in particular of a motor vehicle, where nitric oxides produced by an internal combustion engine are in a first operating phase (lean phase) as a storing phase for a specified storage time stored in the nitric oxide storage catalyst whilst fulfilling a preset switch-over condition at a specified switch-over point in time for a specified discharge time to a second operating phase as discharge phase, wherein nitric oxides stored during the storage time are removed from the nitric oxide storage catalyst, and the nitric oxide mass flow is integrated upstream of the nitric oxide storage catalyst and/or the nitric oxide mass flow is integrated downstream of the nitric oxide storage catalyst over an identical period in time,
**characterised in that**
in a first stage of determining the ageing degree of the storage catalyst a switch-over operating point (U) is determined, and the switch-over operating point (U) is determined

a) from an instantaneous operating temperature at the switch-over time, and
b) from the integral value (X) of the nitric oxide mass flow determined at the switch-over time before or after the storage catalyst and/or from the switch-over time;

The respective switch-over operating point (U) is, in a second stage for defining the ageing degree of the storage catalyst, compared with a storage catalyst capacity field which extends over a temperature window, presetable, in particular optimised relative to fuel consumption, which is established by a plurality of individual operating points for a new and an aged storage catalyst, in such a manner that
a switch-over operating point lying within the storage catalyst capacity field does not represent going below the minimum nitric oxide storage capacity but a change relative to the previous operating point as a measure of storage catalyst ageing; and that
a switch-over operating point leaving the storage catalyst capacity field represents going below the minimum nitric oxide storage capacity.

2. Method according to Claim 1, **characterised in that**, for the purpose of setting the switch-over point from the storage phase to the discharge phase, a relative nitric oxide slip as difference between the nitric oxide mass flow flowing into the nitric oxide storage catalyst and nitric oxide mass flow flowing out of the nitric oxide storage catalyst, each relative to the storage time is determined in such a manner that the quotient of the integral values of the nitric oxide mass flow before and after the nitric oxide storage catalyst is furthermore a relative relation with a presetable nitric oxide conversion degree derived from an exhaust gas threshold, so that in the presence of this presetable switch-over condition a switch-over from the storage phase to the discharging phase at the switch-over point in time optimised relative to fuel consumption and storage potential is carried out.

3. Method according to Claim 1 or 2, **characterised in that** the storage catalyst capacity field relative to the temperature window is defined, on the one hand, by a border line for a new storage catalyst and, on the other hand, by a border line for an aged storage catalyst representing a threshold ageing state.

4. Method according to one of Claims 1 to 3, **characterised in that** the temperature window includes temperature values between approximately 200°C and approximately 450°C.

5. Method according to one of Claims 1 to 4, **characterised in that** an error signal is set in the motor control device when going below the minimum nitric oxide storage capacity.

6. Method according to one of Claims 2 to 5, **characterised in that** the relative slip is the quotient from the integral via the nitric oxide mass flow downstream of oxide storage catalyst and from the integral via the nitric oxide mass flow upstream of the nitric oxide storage catalyst; and
this quotient is, for the purpose of determining the switch-over condition, set equal with a preset switch-over threshold value K which reverts back to the preset nitric oxide conversion degree so that, on meeting this switch-over condition, a switch-over from the storage phase at the end of a thus determined storage time to the discharge phase is carried out.

7. Method according to Claim 6, **characterised in that** the switch-over threshold value K meets the following equation:

$$K = 1 - \text{preset nitric oxide conversion rate}$$

With a preset nitric oxide conversion rate of less than 1, preferably with a preset nitric oxide conversion rate of less than 0.80, maximally preferred 0.95.

8. Method according to one of Claims 1 to 7, **characterised in that** the nitric oxide mass flow is modelled ahead of the nitric oxide storage catalyst.

9. Method according to one of Claims 1 to 8, **characterised in that** the nitric oxide mass flow downstream of the nitric oxide storage catalyst is measured by means of a nitric oxide sensor.

10. Method according to Claim 9, **characterised in that** a nitric oxide mass flow signal, measured by means of the nitric oxide sensor after the nitric oxide storage catalyst, is delivered to a control and regulating device where the nitric oxide mass flow measured after the nitric oxide storage catalyst, is over time integrated up, and a thus determined integral value is, together with the integral value of the nitric oxide mass flow before the nitric oxide storage catalyst related to the presentable nitric oxide conversion degree for the purpose of determining the switch-over point, and the control and regulating device initiates in the presence of the switch-over condition a control signal for switching over the nitric oxide storage catalyst from the storage phase to the discharge phase.

**Revendications**

1. Procédé de détermination du degré de vieillissement d'un catalyseur accumulateur d'oxyde d'azote d'un moteur à combustion interne, en particulier, d'un véhicule automobile, dans lequel les oxydes d'azote produits par le moteur à combustion interne sont stockés dans une première phase de fonctionnement (phase appauvrie), appelée phase de stockage, pour un temps de stockage déterminé dans le catalyseur accumulateur d'oxyde d'azote et, lors de l'apparition d'une condition de commutation prédéterminée, à un instant de commutation déterminé, une deuxième phase de fonctionnement, appelée phase d'évacuation, est enclenchée pour un temps d'évacuation déterminé, dans laquelle les oxydes d'azote stockées pendant le temps de stockage sont évacués du catalyseur accumulateur d'oxyde d'azote, moyennant quoi le débit massique d'oxyde d'azote avant le catalyseur accumulateur d'oxyde d'azote et/ou le débit massique d'oxyde d'azote après le catalyseur accumulateur d'oxyde d'azote sont intégrés sur la même durée,

**caractérisé en ce que**,
dans une première étape, pour la détermination du degré de vieillissement du catalyseur accumulateur, un point de fonctionnement de commutation (U) est déterminé, moyennant quoi le point de fonctionnement de commutation (U) est déterminé:

a) à partir d'une température de fonctionnement instantanée à l'instant de l'enclenchement, et
b) à partir de la valeur d'intégrale (X) du débit massique d'oxyde d'azote déterminé à l'instant de l'enclenchement, avant ou après le catalyseur accumulateur et/ou à partir de l'instant de l'enclenchement,

**en ce que** le point de fonctionnement de commutation (U) respectif est comparé, dans une deuxième étape pour la détermination du degré de vieillissement du catalyseur accumulateur avec un champ de capacité du catalyseur accumulateur, s'étendant dans une fenêtre de température, prédéterminé et optimisé notamment en ce qui concerne la consommation de carburant , qui est formé par une pluralité de points de fonctionnement pour un nouveau et un ancien catalyseur accumulateur, de façon à ce que
un point de fonctionnement de commutation situé à l'intérieur du champ de capacité du catalyseur accumulateur ne représente pas un passage en dessous de la capacité minimale de stockage d'oxyde d'azote mais que la modification par rapport au point de fonctionnement précédent représente le degré de vieillissement du catalyseur accumulateur et à ce que,
un point de fonctionnement de commutation quittant le champ de capacité du catalyseur accumulateur représente un passage en dessous de la capacité minimale de stockage de l'oxyde d'azote.

2.  Procédé selon la revendication 1, **caractérisé en ce que**, pour la détermination de l'instant du passage de la phase de stockage à la phase d'évacuation, un glissement relatif d'oxyde d'azote est déterminé comme la différence entre le débit massique d'oxyde d'azote entrant dans le catalyseur accumulateur d'oxyde d'azote et le débit massique d'oxyde d'azote sortant du catalyseur accumulateur d'oxyde d'azote par rapport au temps de stockage, de façon à ce que le quotient des valeurs intégrales du débit massique d'oxyde d'azote avant et après le catalyseur accumulateur d'oxyde d'azote est amené en relation relative avec un degré de conversion de l'oxyde d'azote prédéterminable déduit à partir d'une valeur limite des gaz d'échappement, de façon à ce que lors de l'apparition d'une condition de commutation prédéterminée, le passage de la phase de stockage à la phase d'évacuation est effectuée à l'instant de commutation optimisé du point de vue de la consommation de carburant et du potentiel de stockage.

3.  Procédé selon la revendication 1 ou 2, **caractérisé en ce que** le champ de capacité du catalyseur accumulateur par rapport à la fenêtre de température est limité d'une part par une limite pour un nouveau catalyseur accumulateur et d'autre part par une limite pour un ancien catalyseur accumulateur présentant un état limite de vieillissement.

4.  Procédé selon l'une des revendications 1 à 3, **caractérisé en ce que** la fenêtre de température comprend des valeurs de température entre environ 200°C et environ 450°C.

5.  Procédé selon l'une des revendications 1 à 4, **caractérisé en ce que** lors du passage en dessous de la capacité minimale de stockage de l'oxyde d'azote, un signal d'erreur est déclenché dans le dispositif de contrôle du moteur.

6.  Procédé selon l'une des revendications 2 à 5, **caractérisé en ce que** le glissement relatif est le quotient de l'intégrale sur le débit massique d'oxyde d'azote après le catalyseur accumulateur d'oxyde d'azote et de l'intégrale sur le débit massique d'oxyde d'azote avant le catalyseur accumulateur d'oxyde d'azote, et
**en ce que**, pour la détermination de la condition de commutation, ce quotient est rendu égale à une valeur seuil de commutation prédéterminable qui provient du degré de conversion de l'oxyde d'azote prédéterminable, de façon à ce que lorsque cette condition de commutation est remplie, il en résulte un passage de la phase de stockage, à la fin du temps de stockage ainsi déterminé, à la phase d'évacuation.

7.  Procédé selon la revendication 6, **caractérisé en ce que** la valeur seuil de commutation K est donnée par l'équation suivante :

$$K = 1 - \text{taux de conversion prédéterminé de l'oxyde d'azote}$$

Avec un taux de conversion prédéterminé de l'oxyde d'azote inférieur à 1, de préférence avec un taux de conversion prédéterminé de l'oxyde d'azote d'au moins 0,8, et de préférence de 0,95.

**8.** Procédé selon l'une des revendications 1 à 7, **caractérisé en ce que** le débit massique d'oxyde d'azote est modélisé avant le catalyseur accumulateur d'oxyde d'azote.

**9.** Procédé selon l'une des revendications 1 à 8, **caractérisé en ce que** le débit massique d'oxyde d'azote est mesuré après le catalyseur accumulateur d'oxyde d'azote à l'aide d'un capteur d'oxyde d'azote.

**10.** Procédé selon la revendication 9, **caractérisé en ce qu'**un signal de débit massique d'oxyde d'azote, mesuré à l'aide du capteur d'oxyde d'azote après le catalyseur accumulateur d'oxyde d'azote, est entré dans un dispositif de contrôle et de régulation, dans lequel le débit massique d'oxyde d'azote mesuré après le catalyseur accumulateur d'oxyde d'azote est intégré sur le temps et la valeur d'intégrale ainsi déterminée est lié, tout comme la valeur d'intégrale du débit massique d'oxyde d'azote avant le catalyseur accumulateur d'oxyde d'azote, au degré prédéterminable de conversion de l'oxyde d'azote afin de déterminer l'instant de commutation, moyennant quoi le dispositif de contrôle et de régulation envoie, lors de l'apparition de la condition de commutation, un signal de contrôle pour le passage du catalyseur accumulateur d'oxyde d'azote de la phase de stockage à la phase d'évacuation.

FIG. 1

FIG. 2

FIG. 3

FIG. 4

FIG. 5

NO$_x$
[g]

absoluter Schlupf

reduzierter Schlupf

Zeit t
[s]

FIG. 6    (Stand der Technik)